# EUROPEAN PATENT APPLICATION

(11) **EP 3 514 606 A1**
(43) Date of publication of application: **24.07.2019**
(21) Application number: 18153068.4
(22) Date of filing: 23.01.2018
(51) Int. Cl.: G02B 27/14, G02B 27/01, G02B 27/00

(54) **EYE TRACKING FOR HEAD-WORN DISPLAY**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A display assembly (105) for mounting on a head-worn device such as a helmet, and having a partially reflective surface located in a field of view of a user, a display projector (40, 50, 200) for projecting light towards the user via the partially reflective surface, a sensor (60, 210) for use in tracking an eye of the user, and a partially reflective imaging surface (120, 220, 225) located in the field of view. The sensor is aligned to receive light forming an image of an eye reflected by the partially reflective imaging surface, the image being for use in the eye-tracking. By using a reflected image, the camera location can be arranged to improve the potentially conflicting needs of keeping the field of view clear, and of having an image from directly in front of the eye, and of limiting the weight and size and imbalance of the helmet. The visor may be used as the partially reflective surface. IR Illumination may be provided by the display projector.

## Description

### FIELD OF THE INVENTION

This disclosure relates to tracking a user's eyes, and in particular such tracking performed on a user wearing a head-worn device for display such as a Head Up Display (HUD).

### BACKGROUND ART

Eye tracking enables a system to monitor the position of a user's eyes in their head and hence calculate the direction of vision. Such systems are particularly useful in conjunction with Head Up Displays which use a transparent component to project images into the user's field of view. For example, data may be overlaid on a view for a pilot, or a night-vision system may be used to project an augmented view over the dark natural view.

Head-worn devices having displays are systems which are mounted to the helmet (or other headpiece) of a user such that the transparent components are positioned in front of a user's eyes even as their head is moved. Such displays may use a specific set of optics positioned in front of the user's eyes, or may use a visor to project an image.

Systems for tracking a user's eyes traditionally use a camera viewing the user's face to obtain an image of the user's eye. Image processing systems can then extract the eye position from the image and hence calculate the user's viewing direction. In order to ensure performance in all conditions the face may be illuminated with an Infra Red (IR) source and an IR camera utilised. The pupil absorbs IR wavelengths and hence appears dark, whereas the sclera reflects IR wavelengths and thus appears bright.

However, illumination systems with a camera viewing the face have a number of disadvantages. The optimum position for the camera and light source is in front of the face, and hence obscures the user's vision. Also, the IR illumination is not contained and hence in the case of a pilot may leak out of the cockpit which is disadvantageous from a detection standpoint.

There is therefore a requirement for an eye-tracking system for use with helmet mounted HUDs.

The embodiments described below are not limited to implementations which solve any or all of the disadvantages of known systems.

### SUMMARY OF THE INVENTION

This summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. There is provided a display assembly for mounting on a head-worn device, and having a partially reflective and transparent surface located in a field of view of a user of the device, and a display projector for projecting light on to the partially reflective surface for reflection by the partially reflective surface towards a wearer of the display assembly. There is also a sensor for use in tracking an eye of the user, and the sensor is aligned to receive light forming an image of at least one eye of the wearer, the light forming the image being reflected by the partially reflective surface towards the sensor, the image being for use in eye-tracking.

Other features may be added in particular embodiments, such as an inside surface of a visor of the head-worn device forming the partially reflective imaging surface. Another such additional feature of the display assembly is a source of non-visible illumination for illuminating the eye of the user, without interfering with the display. Another such additional feature is the source of non-visible illumination comprising the display projector.

Another such additional feature is the display projector being arranged to interleave in time the non-visible illumination output with the display output, such that interruptions to the display are imperceptible to the user. Another such feature is the sensor being synchronised to the interleaving so as to selectively sense the non-visible illumination reflected from the eye.

Another such additional feature is the display projector comprising a colour sequential frame display of visible frames, and the interleaving comprising outputting the non-visible illumination output between different ones of the visible frames of the sequence. Another such additional feature is the non-visible illumination comprising an Infra Red (IR) output. Another such additional feature is an eye tracking analyser coupled to the sensor and configured to output an eye tracking indication, and the display assembly comprising an output display generator, coupled to the eye tracking analyser and configured to generate the display according to the eye tracking indication. Another additional feature is that in use the sensor is located above the field of view of the wearer on a brow of the head-worn device. There can be one eye tracking sensor for each eye. A field of view of the eye tracking sensor may be offset from an optical path of the display.

### BRIEF DESCRIPTION OF THE DRAWINGS

Embodiments of the invention will be described, by way of example, with reference to the following drawings, in which:
Figure 1 shows a front view of an embodiment showing optical paths for imaging and illumination of one side,
Figure 2 shows a corresponding side view,
Figure 3 shows a time chart of frames with interleaved IR illumination
Figure 4 shows a schematic view of an embodiment,
Figure 5 shows a schematic view of a similar embodiment with a single partially reflective surface for display and imaging,
Figure 6 shows a schematic view of a similar embodiment with illumination, and
Figure 7 shows a schematic view of a similar embodiment with eye tracking analysis feeding a display generator.

### DETAILED DESCRIPTION

Further details, aspects and embodiments of the invention will now be described, by way of example only, with reference to the drawings. Elements in the figures are illustrated for simplicity and clarity and have not necessarily been drawn to scale. Like reference numerals have been included in the respective drawings to ease understanding.

By way of introduction, some issues with current eye tracking technologies will be set out. They illuminate the eye with infra-red light (IR) and use a camera to track the position of the user's pupil by determining the contrast difference between the pupil (which absorbs the IR and therefore appears dark) and the sclera (which reflects the IR and therefore appears white). If such a system were included in a visor projected display, illuminating and imaging the eye correctly becomes difficult since the ideal position for the illumination and camera sits in line with the projected display optics path. To address this problem, it has now been appreciated that a partially reflective surface as is used for the display projection, can be used also for the optical path of the eye tracking camera. In some examples, this can be incorporated with the visor projected display architecture as will be described below. References to eye tracking are intended to encompass tracking any characteristics of the eye, not only the direction and movement of the gaze, but also focal distance, eye fatigue, characteristics indicating stress, attention level, illness, and so on. Applications can include display systems provided to users such as pilots, vehicle operators, machinery control operators. In addition display systems used within gaming applications and simulators used for training or human analysis may also incorporate eye tracking systems.

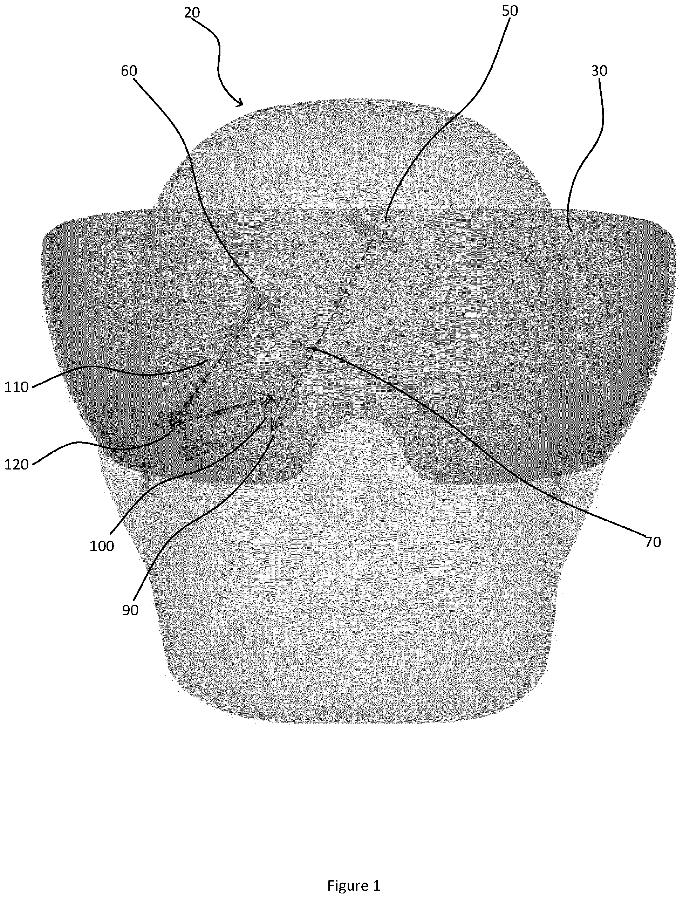

Figure 1 shows a front view of parts of a head-worn device, including visor 30, being worn by a user 20 having a display assembly according to an embodiment. The display assembly is mounted on the helmet and has a display projector 50. Display projector 50 is for projecting to the right eye of the user. A further projector, not shown, is provided for the left eye of the user. The display projector 50 is also arranged to provide illumination of the eye for use by the eye tracking sensor 60, if such illumination is needed. This is not essential in every case because in some examples, the illumination can be provided in other ways, for example by the display, if it is bright enough or if there is enough ambient light, or if a separate illumination source is provided elsewhere in the helmet (for example, on the brim of the helmet).

An optical path 70 is shown for the illumination, extending from an IR output part of the display projector 50, to the partially reflective surface 90 on the visor and from there to the right eye 100. Another optical path 110 is shown for the image captured by the eye tracking sensor 60, extending from the right eye 100 to the partially reflective surface 120 on the inside of the visor and reflecting from there to the sensor 60. The corresponding optical paths for the display, the illumination and the image captured by the sensor, for the left eye, are not shown for the sake of clarity, but they correspond to those shown for the right eye. It is possible to have a one eye display. It is not essential for the optical paths to cross the centre line as shown, other arrangements are feasible, though it can help to keep the arrangement more compact. It is not essential for the sensor image optical path to be offset from the display optical path as shown. It is not essential to use the visor inside surface as the partially reflective surface for reflecting any or all of the optical paths, other partially reflective surfaces could be provided. Other optical equipment can be incorporated, for example a forward facing sensor. The visor or other partially reflective surface can be retractable or fixed.

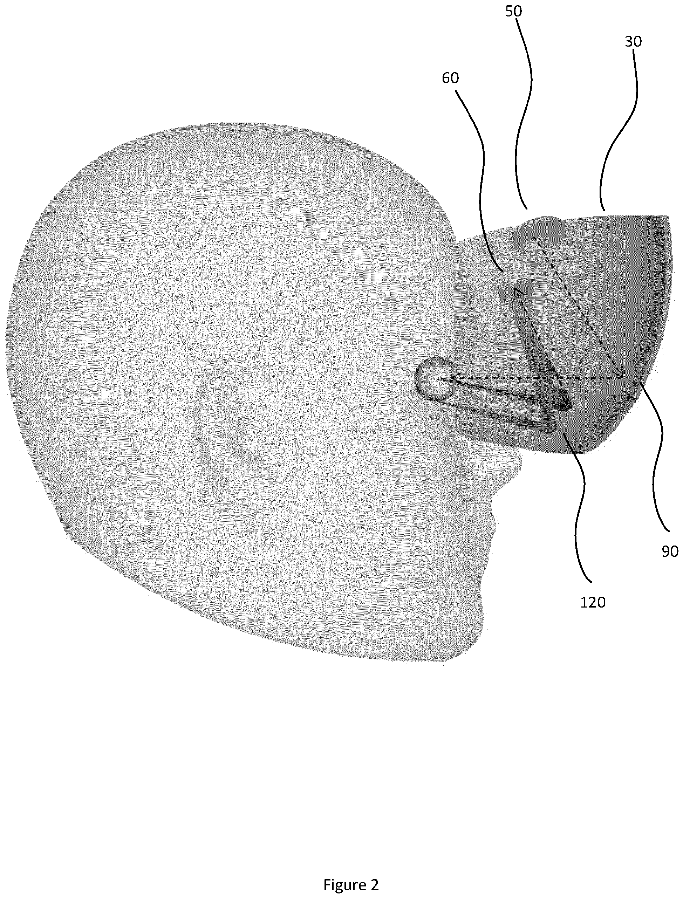

A side view of the same arrangement is shown in figure 2. Corresponding reference numerals have been used as appropriate. This shows more clearly how the optical path for illumination is reflected off the partially reflective surface 90 such as the inside of the visor, and how the optical path for the image captured by the sensor, is offset vertically and horizontally in this example from the illumination optical path. There can be multiple illumination paths from more than one angle, either from the same source or from multiple sources, to enable different images and different glints to be detected, to provide different measurements of gaze direction, which can be selected or averaged to improve accuracy for example

As will be understood, light from different parts of the display projector will follow different optical paths to the user's eye to create the required image at the eye. Different colours or wavelengths may follow different paths if they are arranged with a spatial offset, or it could be that different parts of the display projector are arranged to produce different spatial areas of the resulting display, such as different quadrants, a higher resolution central display and lower resolution peripheral parts for example.

The display projector may comprise of an optical light source such as a light emitting diode (LED) or laser diode and a companion display device such as an LCD, LCOS or DMD device. In addition self-emissive display sources may be used without need for a separate optical light source. The display projector may also comprise of optical elements to project an image from the display device toward the display visor. The projected light is then reflected off the display visor and presented to the user as an image, at a given focal distance. The curvature of the visor surface in horizontal and vertical axes can play a role in the optical design to achieve the desired image presented to the user's eye. The exit pupil of the optical system is aligned to the defined design eye point which coincides with the user's eye.

Accordingly figures 1 and 2 show an example of a display assembly for mounting on a head-worn device, and having a partially reflective transparent surface located in a field of view of a user of the device, a display projector for projecting light on to the partially reflective surface for reflection by the partially reflective surface towards a wearer of the display assembly , a sensor for use in tracking an eye of the user. In this assembly the sensor is aligned to receive light forming an image of at least one eye of the wearer, the light forming the image being reflected by the partially reflective surface towards the sensor, the image being for use in eye-tracking.

There may be multiple advantages to having the sensor use a reflected image. Firstly the user's field of view of the outside world is not impacted by sensor hardware located near to or around the eye, instead the sensor hardware can be located nearer to the brim of the helmet, thus providing little to no obscuration of the outside world. Secondly, the optical path of the eye tracking sensor may be optimised to capture an image of the user's eye from below the eye line, as highlighted in Figure 2. Typical eye tracking systems wherein the eye tracking camera is located above the eye are impacted when the user looks downward due to the fact that the eye pupil is no longer visible as it is obscured by the user's eyelids or eyelashes. In contrast, the implementation highlighted in Figure 2 has the advantage that when the user looks downward the eye pupil is still visible and not obscured by the user's eyelids or eyelashes. This is not usually possible without having the eye tracking camera located in front of, and below, the user's eye which again would impact the users field of view of the outside world. Finally, as the camera hardware may be integrated closer to the users head the imbalances created by the extra mass of the hardware can be better corrected to provide enhanced comfort for the user.

Although shown using the visor as the partially reflective surface, the partially reflective surface can be elsewhere such as being incorporated in head up display "close to the eye" optics. The partially reflective surface can be implemented by a flat surface or a curved surface or a surface made up of more than one face for reflecting the light for the projected display, and for reflecting the image for the sensor. If an inside surface of the visor of the helmet is used as the partially reflective surface;, there are advantages of a reduced number of parts and thus reduced weight and cost, and reduced imbalance.

The display assembly shown also represents an example having a source of non-visible illumination for illuminating the eye of the user, without interfering with the display. Having the illumination also be reflected towards the eye can have an advantage that it further helps keep the illumination source out of the field of view and integrated closer to the user's head such that the imbalances created by the extra mass of the illumination hardware can be better corrected to provide enhanced comfort for the user.

The display assembly shown in these figures also represents an example of one in which the source of non-visible illumination is partly or completely provided by the display projector. By using the display projector for illumination, there can be advantages of reduced hardware, so less mass and less imbalance, and due to the fact that the display has to be aligned with user's eye there is no further separate adjustment or alignment of the illumination source for each user.

The display assembly shown is an example of one arranged such that in use the sensor 60 is located above the field of view on a brow of the helmet. This can provide a good image and provide a rigid anchor for the sensor with a minimum of additional weight. The display assembly shown is an example of one having one sensor for each eye. This can help enable more accurate eye tracking. The display assembly shown is an example of one arranged such that a field of view of the sensor is offset from an optical path of the display. An advantage of this is that any interference in the view of the user from a reflection of the sensor can be reduced, and the view of the sensor may suffer less interference from the optical path of the display.

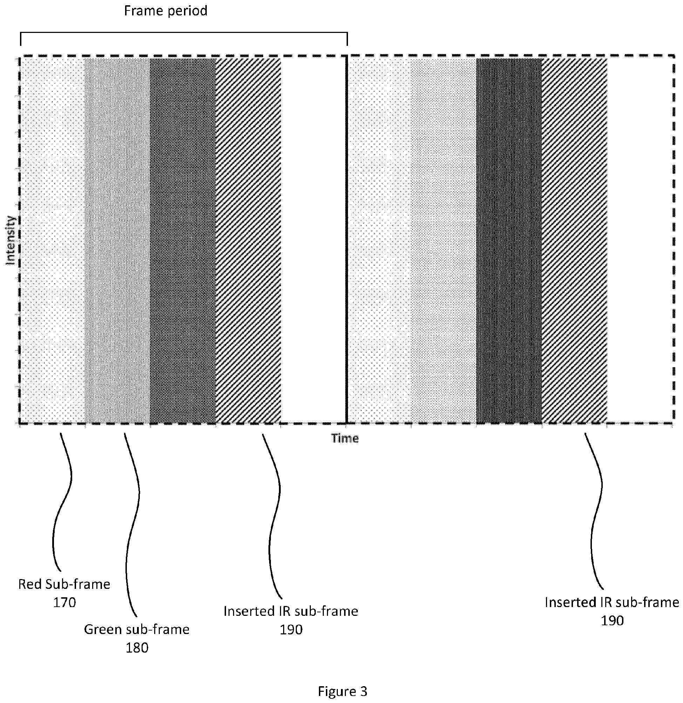

Figure 3 shows a time chart with time flowing across the chart, and showing how a video signal for the display can be provided with a sequence of frames, each frame being made up of a number of sub frames with a gap between the frames. As shown there is a red sub frame 170 followed by a green subframe 180, which may be followed by another green sub frame, to increase the distinctness from the background landscape, or a blue sub frame if a full RGB display is wanted. In the gap between frames is interleaved an IR sub frame 190. This can fill all or part of the gap. Typically, the frame rate is high enough, e.g. greater than 60Hz to be imperceptible to the user, depending also on the persistence of the display.

In operation, if the display projector is colour sequential, it can receive a video signal from a display generator and output discrete red, green and blue sub frames which are displayed sequentially to a user, with the additional sub frame which illuminates with IR. This could be implemented by any type of IR output chip, which could be located alongside any type of visible wavelength output chip such as an LED or laser based display. Such an IR sub frame would have no image content - the drive signal could represent simply a flat "all pixels on" display such that the exit pupil of the display is illuminated wholly with IR light during the IR sub frame. As a consequence, since the exit pupil of the display illuminates the users eye, the eye will be illuminated with IR light during the activation period of the IR subframe. Therefore, the eye may be suitably illuminated with a predictable illumination level, for better accuracy in later image processing for the eye tracking, based on the image captured by the sensor.

Notably, since the visor for the display may be partially reflective and is utilised as a powered optical element for the display system, the same inside surface may also be used with the eye tracking sensor. The sensor may capture the image of the user's eye reflected from the display visor. Consequently, the sensor may be placed near to the brow of the helmet, out of the way and thus inducing no obscuration of the field of view of the user. Overall, if the visor display system is custom fitted per user such that the display system is aligned to the user's eye position, the accompanying eye tracker system will also be aligned.

The display assembly as shown is thus an example of one in which the display projector is arranged to interleave in time the non-visible illumination output with the display output, such that interruptions to the display are imperceptible to the user. By enabling the display projector to carry out both functions, there can be savings in hardware, and therefore also mass. This interleaving can be implemented in various ways including interleaving between frames, or between colours in a multicolour example, or conceivably in gaps between lines for example, for a raster scanning display type.

The display assembly shown is one in which the sensor can be synchronised to the interleaving so as to selectively sense the non-visible illumination reflected from the eye. This can provide an advantage in enabling the sensor to reduce interference from unwanted sensing of variations in the display output reflected from the eye during non-IR illumination frames, which might make it more difficult to interpret the image to determine the direction of gaze or other eye tracking results for example.

The display assembly shown is thus an example of one in which the display projector can provide a colour sequential frame display, and the interleaving can comprise outputting the non-visible illumination output between different ones of the visible frames of the sequence. This can provide an advantage of enabling relatively simple interleaving with little disruption to the display and little alteration to the timings in the display hardware. As discussed above, the non-visible illumination can comprise an Infra Red (IR) output.

The example above is just one arrangement of how colour sequential display frames may be arranged, the RGB frames may be temporally spaced further apart and there may be a large time gap before the subsequent display frame cycle begins. When the image is presented to the user the sub frames are combined due to the extremely small temporal separation of the RGB sub frames, so the user perceives a full colour (RGB) image.

Due to the fact that the colour sequential frame rate may be altered to ensure the RGB sub frames do not fill 100% of the available sub frame time span (i.e. each colour will only illuminate its sub frame for only portion of the allotted time span, or each colour illumination sub frame may be spaced temporally) there are temporal "gaps" in the duty cycle of the display system when no illumination is active and no image is presented to the user. Within these gaps, the projection systems could illuminate and present an additional infra-red sub frame, such that the eye may now be illuminated with IR light. This will not be seen by the user, so will not interfere with the presented display content.

This IR sub frame now illuminates the user's eye for a proportion of the display duty cycle. This IR may be used for eye tracking. By setting a sensor near or within the brow of the helmet, the reverse image path from the eye, reflected off the visor may be collected and imaged.

This sensor module may be positioned strategically such that it is out of the line of sight of the user, presenting no obscuration. Its placement may also avoid the optical path from the projection system to the eye, thus not interfering with displayed images. This is in contrast to some commercial existing 'near to eye' eye trackers, wherein both the IR illumination and sensor system sit in front of or around the eye, which when used in conjunction with a see-through helmet mounted display would suffer the problems previously described.

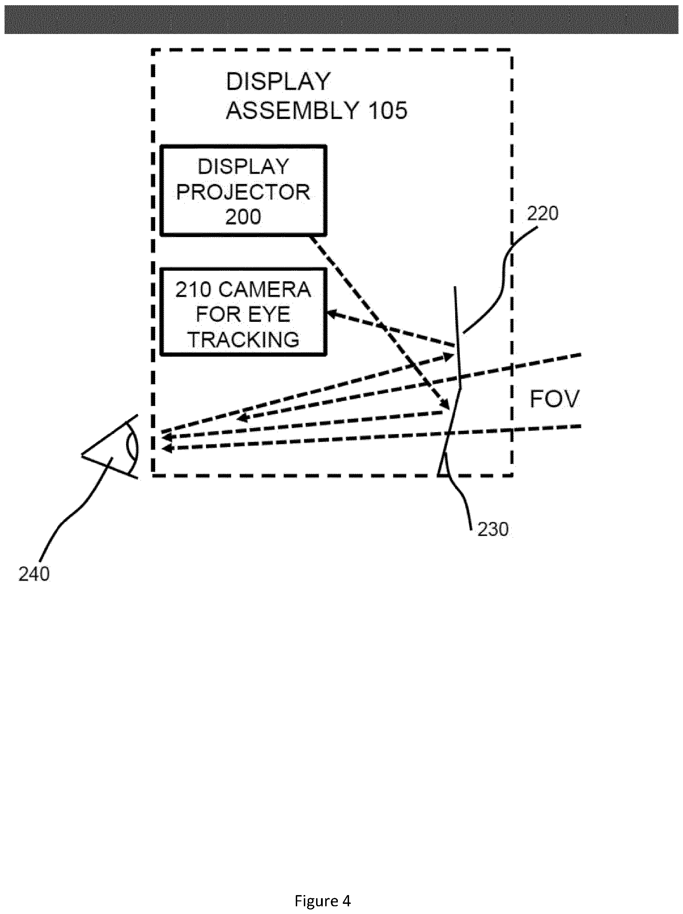

Figure 4 shows a schematic side-view of an embodiment of a display assembly 105, without showing the helmet, for the sake of clarity. The display assembly includes a display projector 200, a sensor 210 for eye tracking, and a partially reflective surface which may be formed of sections 220, 230, having slightly different orientations, both in the field of view of the user's eye 240. The display projector is fed by a display input signal such as a video signal for example from an external (or internal) signal generator (not shown). The partially reflective surface section 220 is shown reflecting an optical path of the display projector (shown by a dotted line arrow). This is in the field of view FOV of the user, again shown by dotted line arrow passing through the partially reflective surface 220. The eye tracking sensor 210 receives an image along an optical path also shown by a dotted line arrow, from the eye, and reflected by the partially reflective surface section 230, also in the field of view of the user. The eye tracking sensor can be operated in cooperation with the display projector in various ways. For example, it can be synchronised with the frame rate of the display, or with interleaving of illumination if that is provided by the display projector. An output of the sensor can be used to track gaze or other eye characteristics which can then be coupled so as to affect the display in various ways, as has been described above.

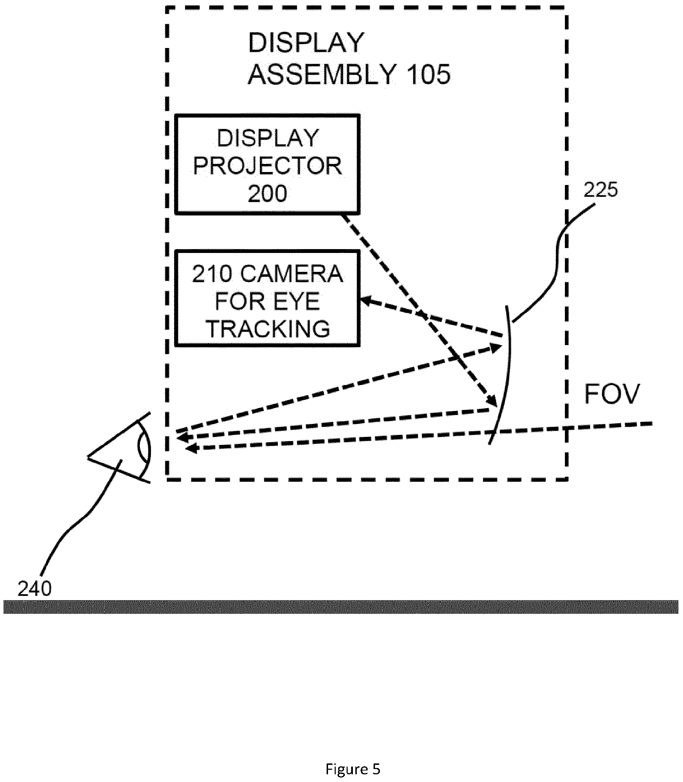

Figure 5 shows a schematic view similar to that of figure 4. Corresponding reference numerals have been used as appropriate. In this case, the partially reflective surface 225, is shown as a curved surface, though it can also be implemented as a flat surface. This curvature can be chosen to enable some focussing of the reflection, which may enable the sensor to avoid needing a separate focussing lens. This can enable advantages of simplicity, reduced weight and cost.

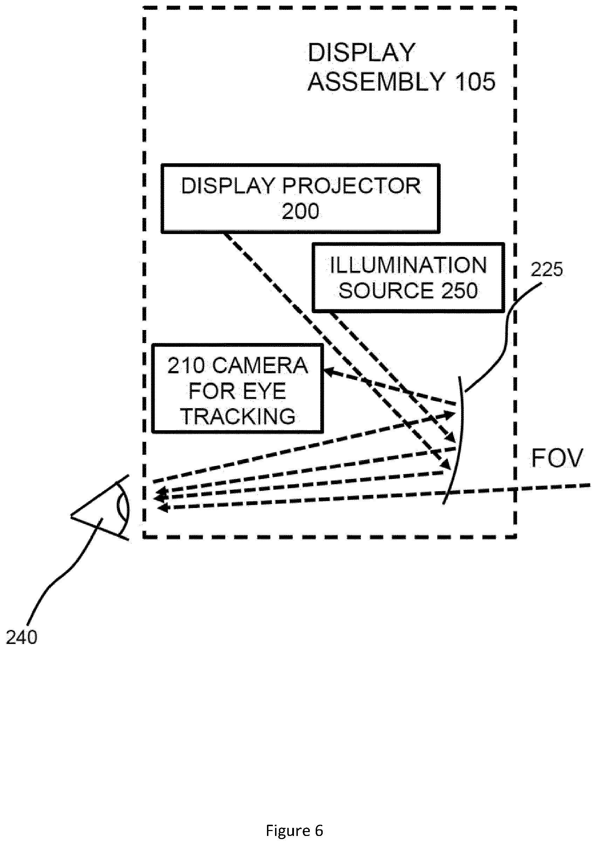

Figure 6 shows a schematic view similar to that of figure 5. Corresponding reference numerals have been used as appropriate. In this case, there is an illumination source 250 for illuminating the eye, to enable a better image for eye tracking. The partially reflective surface 225 used for the display optical path and for the imaging optical path is now also used for the illumination optical path, and shown as a curved surface, though it can also be implemented as a flat surface.

The display assembly shown also represents an example of one in which the display surface is incorporated with the illuminating surface as a single partially reflecting surface. By using the same reflecting surface for both display and illumination, advantages can be obtained of simplicity, reduced weight and cost, and simpler alignment to different users since one alignment covers both display and illumination. It also represents an example of using the same reflecting surface for display, imaging, and illumination.

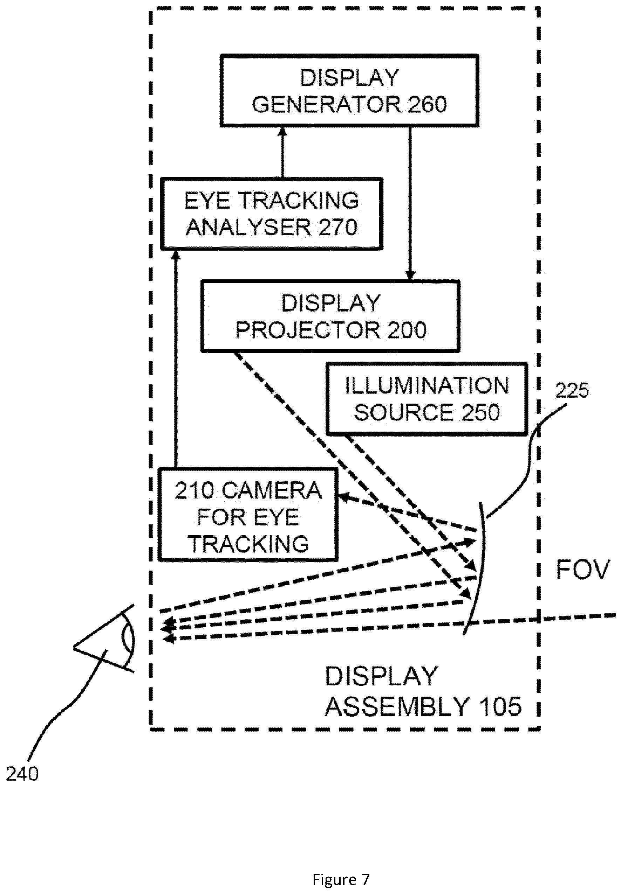

Figure 7 shows a schematic view similar to that of figure 5. Corresponding reference numerals have been used as appropriate. In this case, the display assembly 105 has there is an illumination source 250 for illuminating the eye, and an eye tracking analyser 270, and a display generator 260. The eye tracking analyser is coupled to receive an image from the sensor, and derive eye tracking information from the image. This is coupled to the display generator which generates a display signal according to the information. This display signal is fed to the display projector, for example as a video signal. As an example the display signal may be altered based upon eye tracking information such as the direction of the gaze of the viewer. For example, displayed information created by the display projector will follow the direction of the gaze of the viewer about the field of view of the display.

This figure 7 thus shows an example of a display assembly comprising an eye tracking analyser coupled to the sensor and configured to output an eye tracking indication, and the display assembly comprising an output display generator, coupled to the eye tracking analyser and configured to generate the display according to the eye tracking indication. By generating the display according to the eye tracking, a possible advantage is that the display can be optimised, for example to put more information where the user is looking, or declutter the area where the user is looking, or alter the emphasis of information or the size of text in different parts for example, according to where the user is looking. The eye tracking indication can encompass information on position or movement of the eye, focal distance, stress levels, tiredness levels and so on. Some of these functions of the display assembly may be carried out off the helmet, to minimise weight, but in applications where that is not a limiting constraint there may be advantages in including them in the parts mounted on the helmet. Therefore, references to the display assembly being for mounting on the helmet are intended to encompass display assemblies having some parts such as processors for these functions not being mounted on the helmet.

As a possibly less complex alternative to the interleaved sequential illumination system above, a constant IR illumination channel could be built into the optical system such that it floods the eye consistently with IR light. A dichroic filter i.e. a mirror with an RGB transmit, IR reflect coating could be used to fold and couple the IR light along the optical path of the display. This would have the benefit of avoiding the need to alter the display projector or any part of the timing of the RGB signal being displayed. This mirror could be located in the user's field of view or near the display projector, outside the user's field of view. This represents an alternative to integrating IR illumination within the image generation optical/hardware systems. This involves more hardware as there is an additional partially reflective surface, and so more weight, but it has the benefit of not needing to alter the display projector to handle interleaving the IR light in some way. This may reduce design and development costs or make it easier to adapt existing helmet mounted display systems or other head-worn devices.

Alternative embodiments could involve the visor or other partially reflective surface being spherical, cylindrical or toroidal, normally have an axis of symmetry about the centre of the eyes, and have a radius of curvature between 100mm and 200mm, or other radius if it can conveniently and compactly fit in front of the user's head. Note also that the sensor may be part of a camera having a focussing system and a sensor, whereas if the visor is curved to provide good-enough focussing, one could just use the sensor part. In some embodiments the eye tracking can use an image of the eyes resulting from their illumination by the display light. The non-visible IR (as described above) can typically give sufficient illumination for high contrast images of the eye for tracking, but in an alternative embodiment it is possible to use one component, such as, green, from the visible display for the illumination instead or as well as the non visible illumination.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality. In the claims, the term 'comprising' or "including" does not exclude the presence of other elements.

## Claims

1. A display assembly for mounting on a head-worn device, and having:
a partially reflective and transparent surface located in a field of view of a user of the device,
a display projector for projecting light on to the partially reflective surface for reflection by the partially reflective surface towards a wearer of the display assembly, and
a sensor for use in tracking an eye of the user,
wherein the sensor is aligned to receive light forming an image of at least one eye of the wearer, the light forming the image being reflected by the partially reflective surface towards the sensor, the image being for use in eye-tracking.

2. The display assembly of claim 1, an inside surface of a visor of the head-worn device forms the partially reflective surface.

3. The display assembly of any preceding claim and having a source of non-visible illumination for illuminating the eye of the user, without interfering with the display.

4. The display assembly of claim 4, the source of non-visible-illumination comprising the display projector.

5. The display assembly of any of claims 4 to 6, the display projector being arranged to interleave in time the non-visible illumination output with the display output, such that interruptions to the display are imperceptible to the user.

6. The display assembly of claim 7, the sensor being synchronised to the interleaving so as to selectively sense the non-visible illumination reflected from the eye.

7. The display assembly of claim 7 or 8, the display projector comprising a sequential frame display of visible frames, and the interleaving comprising outputting the non-visible illumination output between different ones of the visible frames of the sequence.

8. The display assembly of any preceding claim when dependent on claim 4, the non-visible illumination comprising a non-visible Infra Red (IR) output.

9. The display assembly of any preceding claim and comprising an eye tracking analyser coupled to the sensor and configured to output an eye tracking indication, and the display assembly comprising an output display generator, coupled to the eye tracking analyser and configured to generate the display according to the eye tracking indication.

10. The display assembly of any preceding claim, arranged such that in use the sensor is located above the field of view of the wearer on a brow of the head-worn device.

11. The display assembly of any preceding claim and having one eye tracking sensor for each eye.

12. The display assembly of any preceding claim arranged such that a field of view of the eye tracking sensor is offset from an optical path of the display.
